**Europäisches Patentamt**

**European Patent Office**

**Office européen des brevets**

(19)

(11) Veröffentlichungsnummer: **0 161 479**
**B1**

# EUROPÄISCHE PATENTSCHRIFT

(12)

(45) Veröffentlichungstag der Patentschrift:
**28.10.87**

(21) Anmeldenummer: **85104257.2**

(22) Anmeldetag: **09.04.85**

(51) Int. Cl.⁴: **C 09 D 7/12,** C 09 D 3/72

(54) Verfahren zur Herstellung von chemikalienbeständigen Beschichtungen von Oberflächen.

(30) Priorität: **19.04.84 DE 3414807**

(43) Veröffentlichungstag der Anmeldung:
**21.11.85 Patentblatt 85/47**

(45) Bekanntmachung des Hinweises auf die Patenterteilung:
**28.10.87 Patentblatt 87/44**

(84) Benannte Vertragsstaaten:
**AT BE CH DE FR GB IT LI NL SE**

(56) Entgegenhaltungen:
**DE - A - 2 300 206**
**DE - C - 1 170 627**

(73) Patentinhaber: **BAYER AG, Konzernverwaltung RP**
**Patentabteilung, D-5090 Leverkusen 1 Bayerwerk (DE)**

(72) Erfinder: **Gruber, Hermann, Dr., Paul-Klee-Strasse 87,**
**D-5090 Leverkusen 1 (DE)**
Erfinder: **Fehlbier, Alois, Dipl.-Ing., Heddinghofen 56,**
**D-5093 Burscheid (DE)**

## Beschreibung

Die Erfindung betrifft ein neues Verfahren zur Herstellung von chemikalienbeständigen Beschichtungen von Oberflächen unter Verwendung eines Beschichtungsmittels auf Basis von organischen Polyisocyanaten, organischen Verbindungen mit alkoholischen Hydroxylgruppen, Wasser, sowie organischen und anorganischen Hilfs- und Zusatzmitteln, wobei Kombinationen aus Glycerin und Hydroxiden bzw. Oxiden von Erdalkalimetallen zwecks Verlängerung der Verarbeitungszeit und Verbesserung der Chemikalienbeständigkeit als Hilfs- bzw. Zusatzmittel mitverwendet werden.

Die Verwendung von Hydroxiden oder Oxiden von Erdalkalimetallen bei der Herstellung von nichtgeschäumten Polyurethankunststoffen unter Verwendung von wasserhaltigen Reaktivsystemen auf Basis von organischen Polyisocyanaten und organischen Verbindungen mit gegenüber Isocyanatgruppen reaktionsfähigen Gruppen ist bereits bekannt. So beschreibt beispielsweise die DE-PS 1 170 627 die Wirkung von Calciumoxid als wasserentziehendes Mittel in Polyurethan-Systemen. Die GB-PS 1 147 695 beschreibt u.a. die Verwendung von Calciumhydroxid in derartigen wasserhaltigen Reaktivsystemen bei der Herstellung von nichtgeschäumten Polyurethankunststoffen. Weiterhin wurden hydraulische Zemente zur Schaumverhinderung in wasserhaltigen Polyurethansystemen herangezogen (vgl. z.B. DE-OS 2 113 046, DE-OS 2 254 251, DE-OS 2 113 042, DE-OS 2 300 206 oder DE-AS 1 924 468). Während die mechanischen Eigenschaften und die Beständigkeit gegen Chemikalien der gemäss diesen Vorveröffentlichungen hergestellten Beschichtungen voll zufriedenstellten, konnte das Problem einer ausreichenden Verarbeitungszeit bislang nicht zufriedenstellend gelöst werden.

Beschichtungsmassen der hier zur Diskussion stehenden Art müssen, um eine fachgerechte Verarbeitung zu ermöglichen, eine Verarbeitungszeit von mindestens 30 Minuten aufweisen.

Es war daher die der Erfindung zugrundeliegende Aufgabe, die bekannten Verfahren zur Herstellung von chemikalienbeständigen Kunststoffen, insbesondere Oberflächenbeschichtungen auf Basis von Wasser und anorganische Füllstoffe enthaltenden Polyurethansystemen so zu verbessern, dass die zum Einsatz gelangenden Beschichtungsmittel eine ausreichende Verarbeitungszeit aufweisen und die Herstellung von Beschichtungen gestatten, die bezüglich ihrer Chemikalienbeständigkeit und ihrer sonstigen Eigenschaften den entsprechenden Systemen des Standes der Technik mindestens ebenbürtig sind.

Diese Aufgabe konnte durch die Bereitstellung des nachstehend näher beschriebenen erfindungsgemässen Verfahrens gelöst werden.

Gegenstand der Erfindung ist ein Verfahren zur chemikalienbeständigen Beschichtung von Oberflächen unter Verwendung eines Beschichtungsmittels bestehend aus

a) einer Polyisocyanatkomponente,

b) einer Polyolkomponente, bestehend aus mindestens einer organischen Polyhydroxylverbindung mit einem Gehalt an alkoholischen Hydroxylgruppen von 0,5 bis 15 Gew.-%,

c) Wasser in einer Menge von 20 bis 60 Gew.-%, bezogen auf das Gewicht der Komponente b),

d) organischen Hilfs- und Zusatzstoffen und

e) anorganischen Hilfs- und Zusatzstoffen,

dadurch gekennzeichnet, dass man ein derartiges Beschichtungsmittel verwendet, welches

d) Glycerin in einer Menge von 40 bis 200 Gew.-%, bezogen auf das Gewicht der Komponente b), gegebenenfalls neben weiteren organischen Hilfs- und Zusatzmitteln und

e) mindestens ein Erdalkalimetallhydroxid oder -oxid in einer Menge von 50 bis 1000 Gew.-%, bezogen auf das Gewicht des Glycerins, gegebenenfalls neben weiteren anorganischen Hilfs- und Zusatzmitteln enthält.

Der Umstand, dass die erfindungsgemässe Aufgabe mit dem erfindungsgemässen Verfahren gelöst werden konnte, ist in zweifacher Hinsicht überraschend. Die erfindungsgemäss zum Einsatz gelangenden Beschichtungsmittel enthalten nach wie vor Hydroxide bzw. Oxide von Erdalkalimetallen, insbesondere Calciumhydroxid, d.h. basische Verbindungen, die bekanntlich eine stark beschleunigende Wirkung auf die Isocyanat-Additionsreaktion ausüben. Ausserdem handelt es sich bei Glycerin bekanntlich um eine gegenüber Polyisocyanaten sehr reaktive Verbindung. Dennoch gestattet die Mitverwendung von Glycerin gegenüber entsprechenden Vergleichsansätzen ohne Glycerin eine Verlängerung der Verarbeitungszeit um mehr als das Doppelte.

Als Polyisocyanatkomponente a) eignen sich beliebige, bei Raumtemperatur flüssige organische Polyisocyanate, wie z.B. flüssige Polyisocyanate auf Basis von Diisocyanatodiphenylmethan, d.h. flüssige Gemische von 4,4'-Diisocyanatodiphenylmethan mit 2,4'-Diisocyanatodiphenylmethan, flüssige Derivate von 4,4'-Diisocyanatodiphenylmethan und gegebenenfalls 2,4'-Diisocyanatodiphenylmethan wie z.B. deren Umsetzungsprodukte mit unterschüssigen Mengen an mehrwertigen Alkoholen, insbesondere an Polypropylenglykolen mit einem Molekulargewicht bis zu 700 oder die Carbodiimid-modifizierten Derivate dieser Diisocyanate, Tris-(isocyanatohexyl)-isocyanurat bzw. seine Gemische mit seinen höheren Homologen, Tris-(isocyanatohexyl)-biuret bzw. dessen Gemische mit seinen höheren Homologen oder flüssige niedermolekulare NCO-Prepolymere auf Basis von 2,4- und/oder 2,6-Diisocyanatotoluol. Bevorzugt werden jedoch Polyisocyanatgemische der Diphenylmethanreihe, wie sie durch Phosgenierung von Anilin/Formaldehyd-Kondensaten zugänglich sind als Polyisocyanatkomponente a) verwendet. Beliebige Gemische der beispielhaft genannten Polyisocyanate können selbstverständlich auch eingesetzt werden. Die Polyisocyanatkomponente a) wird in solchen Mengen eingesetzt, die einer Isocyanatkennzahl von mindestens 30, vorzugsweise von 40 bis 180, besonders bevorzugt von 60-120 entspricht. Unter «Isocyanatkenn-

zahl» ist hierbei die Anzahl der Isocyanatgruppen pro 100 gegenüber Isocyanatgruppen reaktionsfähigen Gruppen zu verstehen, wobei Wasser als einzige anorganische Verbindung in die Berechnung eingeht und als zweiwertige Verbindung zu betrachten ist.

Bei der Polyolkomponente b) handelt es sich um mindestens zwei alkoholische Hydroxylgruppen aufweisende organische Verbindungen mit einem Hydroxylgruppengehalt von 0,5 bis 15, vorzugsweise 3 bis 10 Gew.-% bzw. um Gemische derartiger Verbindungen. Gut geeignet sind die aus der Polyurethanchemie an sich bekannten Polyesterpolyole des Molekulargewichtsbereichs 500 bis 5000, vorzugsweise 600 bis 2000, die bekannten Polyetherpolyole des gleichen Molekulargewichtsbereichs, Hydroxylgruppen aufweisende Polycarbonate des gleichen Molekulargewichtsbereichs, alkoholische Hydroxylgruppen aufweisende Keton- oder Aldehydharze des genannten Hydroxylgruppengehalts, alkoholische Hydroxylgruppen aufweisende Polymerisate und Naturstoffe des genannten Hydroxylgruppengehalts. Besonders gut geeignet sind Fettsäureanteile enthaltende flüssige Polyole wie insbesondere Ricinusöl, Mischungen aus Ketonharzen und Ricinusöl bzw. Verkochungsprodukte von Ketonharzen mit Ricinusöl, wie sie beispielsweise in DE-OS 1 720 710 beschrieben sind.

Bei der Komponente c) handelt es sich um Wasser, welches in einer Menge von 20 bis 60 Gew.-%, vorzugsweise 30 bis 50 Gew.-%, bezogen auf das Gewicht der Komponente b) zum Einsatz gelangt.

Als gegebenenfalls mitzuverwendende organische Hilfs- und Zusatzstoffe d) kommen neben dem erfindungswesentlichen Glycerin, welches in einer Menge von 40 bis 200 Gew.-%, vorzugsweise 70 bis 130 Gew.-%, bezogen auf das Gewicht der Komponente b) zum Einsatz gelangt, beispielsweise die folgenden in Betracht:

— Kunststoffpulver, z.B. Homo- oder Mischpolymerisate von Vinylchlorid, insbesondere pulverförmiges Polyvinylchlorid. Diese Kunststoffpulver können gegebenenfalls in Mengen bis zu 100 vorzugsweise bis zu 50 Gew.-%, bezogen auf das Gewicht der Komponente b) zum Einsatz gelangen.

— Weichmacheröle wie z.B. Alkansulfonsäurephenylester, hergestellt durch Sulfochlorierung von Alkanen bzw. Alkangemischen mit 10 bis 18 Kohlenstoffatomen und anschliessende Veresterung mit Phenol, Dibutylphthalat oder Tributylphosphat bzw. andere Weichmacheröle, wie sie gemäss Stand der Technik beispielsweise bei der Herstellung von weichgemachtem Polyvinylchlorid Verwendung finden. Diese Weichmacheröle gehören zu den besonders bevorzugten organischen Hilfs- und Zusatzmitteln und können in Mengen von bis zu 150 Gew.-%, vorzugsweise 50 bis 140 Gew.-%, bezogen auf das Gewicht der Komponente b) eingesetzt werden.

— Bituminöse Stoffe wie Bituminöle oder Erdölbitumina, die gegebenenfalls in Weichmacher gelöst zum Einsatz gelangen. Diese bituminösen Stoffe können in Mengen bis zu 400 Gew.-%, bezogen auf das Gewicht der Komponente b) zum Einsatz gelangen.

— Paraffinöle, die in Mengen von bis zu 50 Gew.-%, bezogen auf das Gewicht der Komponente b) eingesetzt werden können.

— Emulgatoren, vorzugsweise nicht-ionische Emulgatoren wie z.B. technische Ethoxylierungsprodukte von Alkylphenolen, insbesondere von iso-Nonylphenol, die in Mengen von bis zu 20, vorzugsweise bis zu 15 Gew.-%, bezogen auf die Komponente b), eingesetzt werden können.

Entschäumungsmittel der üblichen Art, die in geringen Mengen mitverwendet werden können.

Bei den anorganischen Hilfs- und Zusatzmitteln e) handelt es sich um die erfindungswesentlichen Hydroxide bzw. Oxide von Erdalkalimetallen und zusätzlich um gegebenenfalls weitere anorganische Hilfs- und Zusatzmittel.

Geeignete Hydroxide bzw. Oxide von Erdalkalimetallen sind insbesondere Magnesiumoxid, Magnesiumhydroxid, Calciumoxid oder Calciumhydroxid. Besonders bevorzugt wird Calciumhydroxid eingesetzt. Diese Hyxdroxide bzw. Oxide gelangen in Mengen von 50 bis 1000 Gew.-%, vorzugsweise 100 bis 500 Gew.-%, bezogen auf das Gewicht des Glycerins zum Einsatz.

Bei den sonstigen, gegebenenfalls mitzuverwendenden anorganischen Hilfs- und Zusatzmitteln handelt es sich beispielsweise um mineralische Zusatzstoffe wie Sand, feinkörniger Kies, Bariumsulfat und/oder Calciumcarbonat, anorganische Pigmente, Russ oder Graphit. Die letztgenannten beiden Zusatzstoffe führen bereits in geringen Mengen zu Beschichtungen, für welche der für elektrisch ableitfähige Beschichtungen erforderliche Widerstandswert von $10^6$ Ω unterschritten werden kann. Die genannten mineralischen Füllstoffe können in bis zu 40fachen Mengen, bezogen auf das Gewicht der Komponente b) mitverwendet werden. Hohe Anteile an mineralischen Füllstoffen werden insbesondere bei der Herstellung von dicken Beschichtungen (bis zu 5 cm Schichtdicke) mitverwendet. Bei der Herstellung von Versiegelungen und Grundierungen wird meistens auf die Mitverwendung derartiger mineralischer Füllstoffe verzichtet.

Grundsätzlich können die beispielhaft genannten Einzelkomponenten bei der Herstellung der erfindungsgemässen Beschichtungsmassen in beliebiger Reihenfolge miteinander vermischt werden. Vorzugsweise wird man jedoch so vorgehen, dass man zunächst die isocyanatgruppenfreien organischen Bestandteile und das Wasser, gegebenanfalls unter Mitverwendung eines Emulgators zu einem emulsionsartigen wässrig-organischen Gemisch vereinigt und diese dann mit der Polyisocyanatkomponente a) und den anorganischen Hilfs- und Zusatzmitteln vermischt. Die erfindungsgemäss verwendeten Beschichtungsmassen weisen eine Verarbeitungszeit von mindestens 50 Minuten auf. Sie können in der üblichen Weise, z.B. mit Rollen oder Spachtelgeräten verarbeitet und nach ca. 24 Stunden durch leichten Verkehr beansprucht werden. Im Vergleich zu den herkömmlichen lösungsmittelfreien Polyurethan-Beschichtungen ist es ein entscheidender Vorteil, dass Wasser enthaltende Substrate, wie z.B. feuchte Betonflächen ohne Nachteil beschichtet werden können. Die ausgehärteten Beschichtungen weisen eine ausgezeichnete Chemikalienbeständigkeit auf. Bemerkenswert ist insbesondere ihre gute Beständigkeit gegenüber mineralischen und organischen Säuren, Alkalien und Lösungsmitteln. Die ausgehärteten Beläge sind darüber hinaus mechanisch hoch belastbar. Auch bei Reinigungsarbeiten mit Wasserdampf bleibt die mechanische Beständigkeit gegenüber Verkehrsbeanspruchungen erhalten. Herkömmliche Fussbodenbeläge zeigen unter diesen Bedingungen eine deutliche Thermoplastizität, verbunden mit geringer Beständigkeit.

Das erfindungsgemässe Verfahren zur Herstellung von Beschichtungen eignet sich zur Herstellung von Versiegelungen und Grundierungen beliebiger Substrate, insbesondere von mineralischen Untergründen (Beton u.ä.), Stahlflächen oder keramischen Platten bei der Herstellung von dickschichtigen Belägen insbesondere Fussbodengelägen oder auch zur Herstellung von Fugenschichten bei der Verlegung von keramischen Platten. Bei dieser Arbeitsweise werden beispielsweise keramische Platten vollflächig mit der erfindungsgemäss zum Einsatz gelangenden Beschichtungsmasse beschichtet und anschliessend verlegt, wobei die gute Haftfestigkeit entscheidend ist. Nach dem Verschliessen der Fugen erhält man so Verbundkonstruktionen, die besonders im Säurebau für hohe Beanspruchungen durch Chemikalien geeignet sind. Ein weiterer Vorteil der erfindungsgemäss zum Einsatz gelangenden Beschichtungsmittel ist in dem Umstand zu sehen, dass die zu ihrer Verarbeitung benützten Geräte, solange die Reaktion der Komponenten noch nicht zu weit fortgeschritten ist, mit Wasser und ohne Anwendung von Lösungsmittel gesäubert werden können.

Die nachstehenden Beispiele dienen zur weiteren Erläuterung des erfindungsgemässen Verfahrens. Alle Prozentangaben beziehen sich auf Gewichtsprozente.

*Beispiel 1*

a) In einem Rührkessel werden 260 Gewichtsteile eines Phenylesters einer technischen $C_{12}$-$C_{18}$-Alkansulfonsäure (Weichmacher) vorgelegt. 100 Gewichtsteile eines pulverförmigen PVC-Homopolymerisats (K-Wert 76) werden mittels Dissolver bei 23°C und einer Rührgeschwindigkei von 3000 U/Min. während 10 Minuten dispergiert. Unter weiterem Rühren gibt man 260 Gewichtsteile des Verkochungsprodukts eines Cyclohexanon-Formaldehyd-Kondensats mit Ricinusöl gemäss Beispiel 1 der DE-OS 1 720 710, 50 Gewichtsteile einer 25%igen wässrigen Lösung eines handelsüblichen Emulgators (ethoxyliertes Isononylphenol, ® MARLOPHEN der Fa. Chemische Werke Hüls AG) und 10 Gewichtsteile eines handelsüblichen Entschäumers (® BEVALOID der Fa. Bevaloid Ltd., England) hinzu. Während 5 Minuten wird bei einer Umdrehungszahl von 3000 U/Min. weitergerührt. Dann werden 60 Gewichtsteile Wasser eingerührt und nach weiteren 5 Minuten Rührzeit 260 Gewichtsteile 1,2,3-Propantriol unter fortgesetztem Rühren hinzugefügt. Nach einer Rührzeit von 5 Minuten unter gleichen Bedingungen erhält man eine lagerstabile Emulsion der Viskosität 1500 mPa.s/23°C.

b) 100 Gewichtsteile der gemäss 1a) hergestellten Emulsion werden mit 140 Gewichtsteilen eines Polyisocyanatgemischs der Diphenylmethanreihe mit einem NCO-Gehalt von 31% und einer Viskosität von 120 mPa.s/23°C bei 23°C vermischt. In das so erhaltene Zweikomponenten-Bindemittelgemisch wird anschliessend ein Füllstoffgemisch bestehend aus

    500 Gewichtsteile Quarzsand 0,1-0,2 mm Körnung
  1000 Gewichtsteile Quarzsand 0,8-1,2 mm Körnung
     80 Gewichtsteile Calciumhydroxid .

homogen zugemischt.

Die fertige Mischung hat eine mörtelähnliche Konsistenz und wird mit Hilfe einer Glättkelle auf Betonflächen aufgetragen, die vorher mit einer Grundierung, bestehend aus dem gleichen Bindemittel wie es für den Kunstharzmörtel verwendet wird, behandelt worden sind (Schichtdicke: ca 3 cm).

Die Verarbeitungszeit des Mörtels beträgt ca. 50 Min. bei 23°C. Der Kunstharzmörtel härtet störungsfrei aus, ist homogen und zeigt gemessen nach DIN 1164 folgende mechanische Eigenschaften:

| Druckfestigkeit | 55 N/mm² |
|---|---|
| Biegefestigkeit | 15 N/mm² |

Die Beschichtung ist nach ca. 15 Stunden begehbar und nach ca. 3 Tagen voll belastbar.

Beschichtungen nach 1b) zeigen hervorragende Beständigkeiten gegen die meisten anorganischen und organischen Säuren sowie Alkalien. Ebenso ausgezeichnete Beständigkeit ist gegen starke Lösemittel gegeben.

*Beispiel 2* (Vergleichsversuch)

Beispiel 1 wird wiederholt, mit dem Unterschied, dass auf die Zugabe von 1,2,3-Propantriol verzichtet wird. Die Viskosität der Emulsion beträgt 1300 mPa.s/23°C.

Nach Zugabe des Polyisocyanates und des Füllstoffgemisches aus Beispiel 1b) wird eine Verarbeitungszeit von 15 Minuten bei 23°C erhalten, gegenüber 50 Minuten bei der Zusammensetzung entsprechend Beispiel 1. Die Prüfung nach DIN 1164 ergibt folgende Werte:

| Druckfestigkeit | 30 N/mm² |
|---|---|
| Biegefestigkeit | 10 N/mm² |

*Beispiel 3* (Vergleichsversuch)

In einem Vergleichsversuch wird das Beispiel 1a) wiederholt mit dem Unterschied, dass anstelle von 1,2,3-Propantriol folgende Polyole eingesetzt werden:

a) 1,2,6-Hexantriol (260 Gewichtsteile)
b) Ethylenglykol (260 Gewichtsteile)
c) Trimethyl-1,6-hexandiol (260 Gewichtsteile).

Die nach Zugabe des Polyisocyanats gemäss 1b) zu den einzelnen Emulsionen resultierenden Gemische sind zur Herstellung von Polyurethan-Beschichtungen nicht geeignet, da sie nicht lagerbeständig sind.

## Patentansprüche

1. Verfahren zur chemikalienbeständigen Beschichtung von Oberflächen unter Verwendung eines Beschichtungsmittels bestehend aus

a) einer Polyisocyanatkomponente,

b) einer Polyolkomponente, bestehend aus mindestens einer organischen Polyhydroxylverbindung mit einem Gehalt an alkoholischen Hydroxylgruppen von 0,5 bis 15 Gew.-%,

c) Wasser in einer Menge von 20 bis 60 Gew.-%, bezogen auf das Gewicht der Komponente b),

d) organischen Hilfs- und Zusatzstoffen und

e) anorganischen Hilfs- und Zusatzstoffen,

dadurch gekennzeichnet, dass man ein derartiges Beschichtungsmittel verwendet, welches

d) Glycerin in einer Menge von 40 bis 200 Gew.-%, bezogen auf das Gewicht der Komponente b), gegebenenfalls neben weiteren organischen Hilfs- und Zusatzmitteln und

e) mindestens ein Erdalkalimetallhydroxid oder -oxid in einer Menge von 50 bis 1000 Gew.-%, bezogen auf das Gewicht des Glycerins, gegebenenfalls neben weiteren anorganischen Hilfs- und Zusatzmitteln enthält.

2. Verfahren gemäss Anspruch 1, dadurch gekennzeichnet, dass die Polyisocyanatkomponente a) in einer, einer Isocyanatkennzahl von 40 bis 180 entsprechenden Menge zum Einsatz gelangt.

3. Verfahren gemäss Anspruch 1 und 2, dadurch gekennzeichnet, dass man als Polyisocyanatkomponente a) ein Polyisocyanatgemisch der Diphenylmethanreihe verwendet.

4. Verfahren gemäss Anspruch 1 bis 3, dadurch gekennzeichnet, dass man als zusätzliche organische Hilfs- und Zusatzstoffe d) Polyvinylchlorid, organische Weichmacher, Emulgatoren und/oder bituminöse Stoffe verwendet.

5. Verfahren gemäss Anspruch 1 bis 4, dadurch gekennzeichnet, dass man als zusätzliche anorganische Hilfs- und Zusatzmittel e) Sand, Kies, Pigmente, Russ und/oder Graphit verwendet.

## Claims

1. Process for the chemical-resistant coating of surfaces using a coating agent consisting of

a) a polyisocyanate component,

b) a polyol component consisting of at least one organic polyhydroxyl compound with a content of alcoholic hydroxyl groups of 0.5 to 15% by weight,

c) water in a quantity of 20 to 60% by weight, based on the weight of component b),

d) organic auxiliaries and additives and

e) inorganic auxiliaries and additives,

characterised in that a coating agent is used which contains

d) glycerol in a quantity of 40 to 200% by weight, based on the weight of component b), optionally in addition to other organic auxiliaries and additives and

e) at least one alkaline earth metal hydroxide or oxide in a quantity of 50 to 1000% by weight, based on the weight of the glycerol, optionally in addition to other inorganic auxiliaries and additives.

2. Process according to Claim 1, characterised in that the polyisocyanate component a) is used in a quantity corresponding to an isocyanate index of 40 to 180.

3. Process according to Claim 1 and 2, characterised in that a polyisocyanate mixture of the diphenylmethane series is used as the polyisocyanate component a).

4. Process according to Claim 1 to 3, characterised in that polyvinyl chloride, organic plasticisers, emulsifiers and/or bituminous materials are used as additional organic auxiliaries and additives d).

5. Process according to Claim 1 to 4, characterised in that sand, silica, pigments, carbon black and/or graphite are used as additional inorganic auxiliaries and additives e).

## Revendications

1. Procédé de revêtement de surfaces, résistant aux agents chimiques, avec emploi d'un agent de revêtement consistant en

a) un composant polyisocyanate,

b) un composant polyol consistant en au moins un composé organique polyhydroxylé ayant une teneur en groupes hydroxyle alcooliques de 0,5 à 15% en poids,

c) de l'eau en une quantité de 20 à 60% en poids par rapport au poids du composant b),

d) des auxiliaires et additifs organiques et

e) des auxiliaires et additifs minéraux,

caractérisé en ce qu'on utilise un agent de revêtement du type indiqué qui contient

d) de la glycérine en une quantité de 40 à 200% en poids par rapport au poids du composant b), eventuellement à côté d'autres auxiliaires et additifs organiques et

e) au moins un hydroxyde ou oxyde de métal alcalino-terreux en une quantité de 50 à 1000% en poids par rapport au poids de glycérine, éventuellement à côté d'autres auxiliaires et additifs minéraux.

2. Procédé selon la revendication 1, caractérisé en ce qu'on utilise le composant polyisocyanate a) en une quantité correspondant à un indice d'isocyanate de 40 à 180.

3. Procédé selon les revendications 1 et 2, caractérisé en ce qu'on utilise comme composant polyisocyanate a) un mélange de polyisocyanates de la série du diphénylméthane.

4. Procédé selon les revendications 1 à 3, caratérisé en ce qu'on utilise comme auxiliaires et additifs organiques supplémentaires d) du chlorure de polyvinyle, des plastifiants organiques, des émulsifiants et/ou des substances bitumineuses.

5. Procédé selon les revendications 1 à 4, caractérisé en ce qu'on utilise comme auxiliaires et additifs minéraux supplémentaires e) du sable, du gravier, des pigments, du noir de carbone et/ou du graphite.